# EUROPÄISCHE PATENTSCHRIFT

(11) **EP 3 630 526 B1**
(45) Veröffentlichungstag und Bekanntmachung des Hinweises auf die Patenterteilung: **13.10.2021**
(21) Anmeldenummer: 18725545.0
(22) Anmeldetag: 18.05.2018
(51) Int. Cl.: B60L 50/60, H01M 10/42, H01M 50/342, H01M 50/578, H02H 5/04, H02H 7/18, B60L 3/04, B60L 58/10, H02J 7/00, B60L 3/00

(54) **SPEICHEREINRICHTUNG ZUM SPEICHERN VON ELEKTRISCHER ENERGIE, INSBESONDERE FÜR EIN KRAFTFAHRZEUG, KRAFTFAHRZEUG MIT EINER SOLCHEN SPEICHEREINRICHTUNG, SOWIE VERFAHREN ZUM BETREIBEN EINER SOLCHEN SPEICHEREINRICHTUNG**
STORAGE DEVICE FOR STORING ELECTRICAL ENERGY, IN PARTICULAR FOR A MOTOR VEHICLE, MOTOR VEHICLE WITH SUCH A STORAGE DEVICE, AND METHOD FOR OPERATING SUCH A STORAGE DEVICE
DISPOSITIF DE STOCKAGE D'ÉNERGIE ÉLECTRIQUE, NOTAMMENT POUR UN VÉHICULE AUTOMOBILE, VÉHICULE AUTOMOBILE ÉQUIPÉ D'UN TEL DISPOSITIF DE STOCKAGE ET PROCÉDÉ DE FONCTIONNEMENT D'UN TEL DISPOSITIF DE STOCKAGE

(30) Priorität: 24.05.2017 DE 102017208842
(43) Veröffentlichungstag der Anmeldung: 08.04.2020
(73) Patentinhaber: Bayerische Motoren Werke Aktiengesellschaft, 80809 München (DE)
(72) Erfinder: DARBANDI, Azad, 85774 Unterf hring (DE); HILDINGER, J rgen, 85635 H henkirchen-Siegertsbrunn (DE); SCHÖWEL, Florian, 80807 M nchen (DE); WAAG, Wladislaw, 80992 M nchen (DE)
(86) Internationale Anmeldenummer: PCT/EP2018/063239
(87) Internationale Veröffentlichungsnummer: WO 2018/215380

(56) Entgegenhaltungen:
- EP-A1- 2 284 932
- EP-A1- 2 672 548
- EP-A1- 2 908 359
- DE-A1-102014 200 202

## Beschreibung

Die Erfindung betrifft eine Speichereinrichtung zum Speichern von elektrischer Energie für ein Kraftfahrzeug, gemäß dem Oberbegriff von Patentanspruch 1. Ferner betrifft die Erfindung ein Kraftfahrzeug mit wenigstens einer solchen Speichereinrichtung. Die Erfindung betrifft außerdem ein Verfahren zum Betreiben einer solchen Speichereinrichtung gemäß dem Oberbegriff von Patentanspruch 8.

Eine Speichereinrichtung zum Speichern von elektrischer Energie sowie ein Verfahren zum Betreiben einer solchen Speichereinrichtung sind beispielsweise bereits aus der DE 10 2013 204 534 A1 bekannt. Die Speichereinrichtung umfasst dabei wenigstens eine Speicherzelle, welche ein Zellengehäuse und einen durch das Zellengehäuse begrenzten Aufnahmeraum aufweist. Außerdem weist die Speicherzelle wenigstens ein in dem Aufnahmeraum aufgenommenes Speichermittel zum Speichern von elektrischer Energie auf. Die Speicherzelle ist beispielsweise als Batteriezelle ausgebildet, sodass die Speichereinrichtung beispielsweise als Batterie, insbesondere als Hochvolt-Batterie (HV-Batterie), ausgebildet ist. Außerdem ist eine Sicherheitsvorrichtung der Speichereinrichtung vorgesehen. Im Rahmen des Verfahrens zum Betreiben der Speichereinrichtung wird die Sicherheitsvorrichtung aktiviert. Durch Aktivieren der Sicherheitsvorrichtung kann beispielsweise ein unerwünschter, kritischer Zustand der Speichereinrichtung vermieden oder einem solchen kritischen Zustand entgegengewirkt werden, sodass beispielsweise unerwünschte, aus dem kritischen Zustand resultierende Effekte vermieden oder in einem geringen Rahmen gehalten werden können.

Des Weiteren offenbart die WO 2011/095630 A1 ein Hochstrombatteriesystem, in welchem ein hoher Batteriestrom fließt, insbesondere für Fahrzeugantriebe. Dabei sind eine Batteriesystemüberwachungselektronik und eine Mehrzahl von Batteriemodulen vorgesehen, die jeweils mindestens eine wiederaufladbare Batteriezelle einschließen und derartig mittels einer Betriebsstromleitung elektrisch in Reihe geschaltet sind, dass im Betrieb ein Betriebsstrom durch die Batteriestromleitung fließt.

Außerdem offenbart die EP 2 908 359 A1 eine Sekundärbatterie, mit einer Elektrodenanordnung mit einer ersten Elektrodenplatte und einer zweiten Elektrodenplatte. Der DE 10 2014 200 202 A1 ist eine Batteriezelle als bekannt zu entnehmen, mit einem Zellgehäuse, einer ersten Elektrode mit einer ersten Polarität und mit einer zweiten Elektrode mit einer zweiten Polarität. Aus der EP 2 284 932 A1 ist eine wiederaufladbare Batterie bekannt. Des Weiteren offenbart die EP 2 672 548 A1 ein Batteriepaket mit einer Stromversorgungseinheit.

Aufgabe der vorliegenden Erfindung ist es, eine Speichereinrichtung, ein Kraftfahrzeug und ein Verfahren der eingangs genannten Art zu schaffen, sodass ein besonders sicherer Betrieb auf besonders kostengünstige Weise realisierbar ist.

Diese Aufgabe wird erfindungsgemäße durch eine Speichereinrichtung mit den Merkmalen des Patentanspruchs 1, durch ein Kraftfahrzeug mit den Merkmalen des Patentanspruchs 10 und durch ein Verfahren mit den Merkmalen des Patentanspruchs 11 gelöst. Vorteilhafte Ausgestaltungen der Erfindung sind Gegenstand der abhängigen Ansprüche.

Ein erster Aspekt der Erfindung betrifft eine Speichereinrichtung zum Speichern von elektrischer Energie beziehungsweise elektrischem Strom, insbesondere für ein Kraftfahrzeug wie beispielsweise einen Kraftwagen. Die Speichereinrichtung umfasst wenigstens eine Speicherzelle, welche ein Zellengehäuse und einen durch das Zellengehäuse begrenzten Aufnahmeraum aufweist. Außerdem weist die Speicherzelle wenigstens ein in dem Aufnahmeraum aufgenommenes Speichermittel zum Speichern von elektrischer Energie auf. Das Speichermittel umfasst beispielsweise einen insbesondere flüssigen Elektrolyten und/oder wenigstens eine Elektrode und/oder einen Elektrodenwickel, das heißt wenigstens eine Wicklung. Außerdem umfasst die Speichereinrichtung eine aktivierbare Sicherheitsvorrichtung, mittels welcher beispielsweise durch Aktivieren der Sicherheitsvorrichtung ein unerwünschter kritischer Zustand der Speicherzelle vermieden oder einem solchen kritischen Zustand entgegengewirkt werden kann.

Um nun einen besonders sicheren Betrieb auf besonders kostengünstige Weise realisieren zu können, umfasst die Sicherheitsvorrichtung wenigstens drei Sicherheitseinrichtungen. Eine erste der Sicherheitseinrichtungen ist als eine Trenneinrichtung ausgebildet, mittels welcher zumindest die Speicherzelle von einem Stromkreis der Speichereinrichtung getrennt, insbesondere galvanisch getrennt, werden kann. Durch dieses Trennen der Speicherzelle von dem Stromkreis ist eine elektrische Verbindung zwischen dem Stromkreis und der Speicherzelle unterbrochen, sodass die Speicherzelle nicht mehr elektrisch mit dem Stromkreis verbunden ist.

Eine zweite der Sicherheitseinrichtungen ist als eine Kurzschlusseinrichtung ausgebildet, mittels welcher ein Kurzschluss zumindest der Speicherzelle bewirkt beziehungsweise eingestellt werden kann. Der mittels der Kurzschlusseinrichtung bewirkbare Kurzschluss ist vorzugsweise ein externer Kurzschluss, welcher auch als speicherzellenexterner Kurzschluss bezeichnet wird. Der externe Kurzschluss ist beziehungsweise wird mittels der Kurzschlusseinrichtung nicht etwa innerhalb der Speicherzelle beziehungsweise des Zellengehäuses, sondern außerhalb der Speicherzelle beziehungsweise des Zellengehäuses bewirkbar beziehungsweise bewirkt.

Die dritte Sicherheitseinrichtung ist als eine Entgasungseinrichtung ausgebildet, welche auch als Entgasungseinheit bezeichnet wird. Mittels der Entgasungseinrichtung kann der Aufnahmeraum entgast werden. Hierunter ist insbesondere zu verstehen, dass mittels der Entgasungseinrichtung ein Fluid, insbesondere ein Gas, aus dem Aufnahmeraum und somit aus dem Zellengehäuse und dabei insbesondere an die Umgebung des Zellengehäuses abgeführt werden kann, um dadurch beispielsweise einen übermäßigen, in dem Aufnahmeraum herrschenden Innendruck zu vermeiden.

Des Weiteren ist es erfindungsgemäß vorgesehen, dass die Sicherheitseinrichtungen dazu ausgebildet sind, während eines kritischen Zustandsverlaufs der Speicherzelle nacheinander von einem jeweiligen deaktivierten Zustand in einen jeweiligen aktivierten Zustand überzugehen. Im Rahmen beziehungsweise während des kritischen Zustandsverlaufs ändert beispielsweise die Speicherzelle ihren Zustand, sodass im Zuge dieser Änderung des Zustands der Speicherzelle die Sicherheitseinrichtungen nacheinander, das heißt zeitlich aufeinanderfolgend, aktiviert werden. Folglich werden die Sicherheitseinrichtungen insbesondere durch die beziehungsweise infolge der Veränderung des Zustands der Speicherzelle nacheinander aktiviert.

Unter dem kritischen Zustandsverlauf ist insbesondere zu verstehen, dass während des kritischen Zustandsverlaufs wenigstens ein die Speicherzelle, insbesondere deren Betrieb oder Zustand, charakterisierender Parameter außerhalb eines einen Normalbetrieb der Speicherzelle charakterisierenden Normalbereichs liegt, wobei sich der Parameter beispielsweise während des kritischen Zustandsverlaufs immer weiter von dem Normalbereich entfernt. Bei dem Parameter handelt es sich beispielsweise um den zuvor genannten Innendruck, welcher beispielsweise im Rahmen beziehungsweise während des kritischen Zustandsverlaufs immer weiter zunimmt und sich somit immer weiter von seinem Normalbereich entfernt.

In dem deaktivierten Zustand der Trenneinrichtung ist die Speicherzelle elektrisch mit dem Stromkreis verbunden. Geht nun die Trenneinrichtung von ihrem deaktivierten Zustand in ihren aktivierten Zustand über, so wird die Speicherzelle mittels der Trenneinrichtung von dem Stromkreis getrennt, sodass in dem aktivierten Zustand der Trenneinrichtung die Speicherzelle, insbesondere mittels der Trenneinrichtung, von dem Stromkreis getrennt ist.

In dem deaktivierten Zustand der Kurzschlusseinrichtung ist mittels der Kurzschlusseinrichtung kein Kurzschluss, insbesondere kein externer Kurzschluss, der Speicherzelle bewirkt. Geht die Kurzschlusseinrichtung von ihrem deaktivierten Zustand in ihren aktivierten Zustand über, so wird mittels der Kurzschlusseinrichtung der zuvor genannte, insbesondere externe, Kurzschluss der Speicherzelle bewirkt, sodass in dem aktivierten Zustand der Kurzschlusseinrichtung, insbesondere mittels der Kurzschlusseinrichtung, der, insbesondere externe, Kurzschluss der Speicherzelle eingestellt beziehungsweise bewirkt ist.

In dem deaktivierten Zustand der Entgasungseinrichtung unterbleibt ein durch die Entgasungseinrichtung bewirktes Entgasen des Zellengehäuses beziehungsweise des Aufnahmeraums. Geht die Entgasungseinrichtung von ihrem deaktivierten Zustand in ihren aktivierten Zustand über, so wird das Zellengehäuse beziehungsweise der Aufnahmeraum mittels der Entgasungseinrichtung entgast. Im Rahmen dieser Entgasung wird ein Fluid, insbesondere ein Gas, mittels der Entgasungseinrichtung aus dem Aufnahmeraum, insbesondere an die Umgebung des Zellengehäuses, abgeführt, wobei das Gas beispielsweise ein heißes Gas beziehungsweise ein heißer Gasstrom ist. Somit wird der Aufnahmeraum in dem aktivierten Zustand der Entgasungseinrichtung mittels der Entgasungseinrichtung entgast. Geht die Entgasungseinrichtung beispielsweise von ihrem deaktivierten Zustand in ihren aktivierten Zustand über, so gibt dabei die Entgasungseinrichtung wenigstens eine Auslassöffnung frei. In dem deaktivierten Zustand der Entgasungseinrichtung ist die Auslassöffnung verschlossen, sodass der Aufnahmeraum nicht über die Auslassöffnung entgast wird. In dem aktivierten Zustand der Entgasungseinrichtung jedoch ist die Auslassöffnung geöffnet, sodass der Aufnahmeraum über die Auslassöffnung entgast wird. Über die Auslassöffnung kann zumindest ein Teil des zunächst in dem Aufnahmeraum aufgenommenen Fluids aus dem Aufnahmeraum und dabei beispielsweise an die Umgebung des Zellengehäuses strömen, wodurch beispielsweise der zuvor genannte Innendruck zumindest zum Teil abgebaut werden kann. Durch das jeweilige Aktivieren der jeweiligen Sicherheitseinrichtung wird die Sicherheitsvorrichtung insgesamt aktiviert.

Der kritische Zustandsverlauf wird beispielsweise durch ein thermisches Ereignis in der Speicherzelle beziehungsweise in der Speichereinrichtung bewirkt. Mit anderen Worten wird beispielsweise die Speicherzelle durch ein thermisches Ereignis von dem zuvor genannten Normalbetrieb in den kritischen Zustandsverlauf überführt, sodass die Speicherzelle durch das thermische Ereignis in einen kritischen Zustand kommt. Das thermische Ereignis resultiert beispielsweise aus einer unfallbedingten Kraftbeaufschlagung und führt zu einer Erwärmung beziehungsweise Erhitzung der Speicherzelle. Das zuvor genannte Fluid, welches mittels der Entgasungseinrichtung aus dem Aufnahmeraum abgeführt werden kann, resultiert beispielsweise aus einem solchen thermischen Ereignis und entsteht beispielsweise aus dem zuvor genannten, insbesondere flüssigen, Elektrolyten.

Da die Sicherheitseinrichtungen zeitlich aufeinanderfolgend aktiviert werden beziehungsweise von ihrem jeweiligen deaktivierten Zustand in ihren jeweiligen aktivierten Zustand übergehen, ist eine zeitliche Schaltreihe beziehungsweise Aktivierungsreihe vorgesehen, in deren Rahmen die Sicherheitseinrichtungen gezielt beziehungsweise definiert aufeinanderfolgend aktiviert werden. Dadurch kann beispielsweise ein thermisches Ereignis in der beispielsweise als Batteriezelle ausgebildeten Speicherzelle deeskaliert werden, sodass beispielsweise ein vorzeitiges Austreten von Feuer und Flamme aus der Speicherzelle, insbesondere aus der Speichereinrichtung insgesamt, vermieden werden kann. Durch das gezielte beziehungsweise definierte, zeitlich aufeinanderfolgende Aktivieren der Sicherheitseinrichtungen ist ein mehrstufiges, insbesondere mindestens dreistufiges, Sicherheitskonzept realisierbar, sodass beispielsweise über eine besonders lange Zeitspanne hinweg vermieden werden kann, dass Feuer und/oder Flammen aus der Speichereinrichtung austritt beziehungsweise austreten. Hierdurch kann beispielsweise eine besonders hohe Sicherheit für Insassen des Kraftfahrzeugs gewährleistet werden. Insbesondere ist es durch das aufeinanderfolgende Aktivieren der Sicherheitseinrichtung möglich, eine thermische Propagation in der Speichereinrichtung zu vermeiden. Im Rahmen einer solchen thermischen Propagation kann es beispielsweise dazu kommen, dass, wenn eine Speicherzelle in der Speichereinrichtung in einen kritischen Zustand kommt, wenigstens eine andere, insbesondere benachbarte Speicherzelle der Speichereinrichtung - obwohl diese selbst nicht in den kritischen Zustand gekommen ist - durch die erste Speicherzelle in einen kritischen Zustand überführt wird und somit zu brennen beginnt. Somit führt beispielsweise das thermische Ereignis der ersten Speicherzelle zu einem unerwünschten thermischen Ereignis der anderen, benachbarten Speicherzelle, was nun jedoch durch das mehrstufige Sicherheitskonzept vermieden werden kann.

Vorzugsweise ist die Sicherheitsvorrichtung an, insbesondere zumindest teilweise in, der Speicherzelle angeordnet und somit auf Zellenebene vorgesehen, sodass das Sicherheitskonzept gegenüber Sicherheitsmaßnahmen, die auf Speicherebene vorgesehen sind, besonders kostengünstig und effektiv umgesetzt werden kann.

Die Sicherheitsvorrichtung ist dazu ausgebildet, dass während des kritischen Zustandsverlaufs zunächst die Trenneinrichtung, danach die Kurzschlusseinrichtung und danach die Entgasungseinrichtung von dem jeweiligen deaktivierten Zustand in den jeweiligen aktivierten Zustand übergeht. Vorzugsweise befindet sich beziehungsweise verbleibt die Trenneinrichtung in ihrem aktivierten Zustand, wenn die Kurzschlusseinrichtung in ihren aktivierten Zustand übergeht. Ferner verbleibt beziehungsweise befinden sich vorzugsweise die Trenneinrichtung und die Kurzschlusseinrichtung in ihrem jeweiligen aktivierten Zustand, wenn die Entgasungseinrichtung in ihren aktivierten Zustand übergeht. Durch die Aktivierung der Trenneinrichtung wird die Speicherzelle rechtzeitig von dem auch als Speicherkreis bezeichneten Stromkreis abgetrennt. Die Kurzschlusseinrichtung wird erst nach der Trenneinrichtung aktiviert und sorgt dafür, dass die Speicherzelle, insbesondere extern, kurzgeschlossen wird. Dies hat einen deeskalierenden Effekt, da durch den Kurzschluss zumindest ein Teil eines Energiegehalts der Speicherzelle elektrisch, insbesondere durch externen und internen Zellwiderstand, aufgebraucht wird. Ferner hat der Kurzschluss einen deeskalierenden Effekt, da durch den Kurzschluss die Zellspannung beträchtlich abfällt und die Freisetzung von Sauerstoff an einer Oberfläche von Kathodenmaterial stark vermindert beziehungsweise unterdrückt wird.

Vorzugsweise hält die Kurzschlusseinrichtung den Kurzschluss mindestens so lange, insbesondere circa 60 Sekunden, bis die Entgasungseinrichtung, insbesondere aufgrund des weiter steigenden Innendrucks, aktiviert wird beziehungsweise in ihren aktivierten Zustand übergeht, das heißt bis die Speicherzelle öffnet. Während der Entgasung, insbesondere während der ersten zehn bis zwanzig Sekunden der Entgasung, wird beispielsweise zumindest ein Großteil des insbesondere als Elektrolyt oder Elektrolytlösung und dabei beispielsweise als Brennstoff ausgebildeten Fluids aus der Speicherzelle abgeführt beziehungsweise entfernt. Durch den rechtzeitigen externen Kurzschluss der Speicherzelle wird beispielsweise verhindert, dass benachbarte Speicherzellen zu brennen beginnen. Ferner kann vermieden werden, dass Feuer und Flamme aus der Speichereinrichtung austreten. In der Folge kann ein besonders sicherer Betrieb dargestellt werden.

Außerdem ist die jeweilige Sicherheitseinrichtung durch einen jeweiligen, in dem Aufnahmeraum herrschenden Druck aus dem jeweiligen deaktivierten Zustand in den jeweiligen aktivierten Zustand überführbar. Mit anderen Worten wird die jeweilige Überführung beziehungsweise der jeweilige Übergang aus dem jeweiligen deaktivierten Zustand in den jeweiligen aktivierten Zustand, insbesondere einzig und allein, durch den zuvor genannten, im Aufnahmeraum herrschenden Innendruck bewirkt, sodass beispielsweise die jeweilige Sicherheitseinrichtung aufgrund des Drucks und somit selbstständig beziehungsweise selbsttätig oder automatisch aus dem jeweiligen deaktivierten Zustand in den jeweiligen aktivierten Zustand übergeht. Wieder mit anderen Worten ausgedrückt erfolgt beispielsweise die jeweilige Aktivierung der jeweiligen Sicherheitseinrichtung, insbesondere einzig und allein, durch den im Aufnahmeraum herrschenden und auf die jeweilige Sicherheitseinrichtung wirkenden Druck, welcher beispielsweise mit fortschreitendem kritischem Zustandsverlauf höher wird.

Somit hat es sich als besonders vorteilhaft gezeigt, wenn mit während des kritischen Zustandsverlaufs zunehmendem, in dem Aufnahmeraum herrschendem Druck zunächst die Trenneinrichtung, danach die Kurzschlusseinrichtung und danach die Entgasungseinrichtung von dem jeweiligen deaktivierten Zustand in den jeweiligen aktivierten Zustand übergeht.

Ein besonders sicherer Betrieb kann dadurch realisiert werden, dass die Trenneinrichtung dazu ausgebildet ist, von dem deaktivierten Zustand in den aktivierten bei einem in dem Aufnahmeraum herrschenden Druck überzugehen, welcher in einem Bereich von einschließlich 5,5 bar bis einschließlich 6,5 bar liegt. Mit anderen Worten, erreicht der Innendruck einen Wert, der in einem Bereich von 5,5 bar bis 6,5 bar liegt, so wird durch den Druck die Trenneinrichtung aktiviert, während eine Aktivierung der Kurzschlusseinrichtung und der Entgasungseinrichtung unterbleibt.

Als weiterhin besonders vorteilhaft hat es sich gezeigt, wenn die Kurzschlusseinrichtung dazu ausgebildet ist, von dem deaktivierten Zustand in den aktivierten Zustand bei einem in dem Aufnahmeraum herrschenden Druck überzugehen, welcher in einem Bereich von 7 bar bis 8 bar liegt. Mit anderen Worten, steigt der Innendruck beispielsweise derart, dass der Innendruck einen Wert aufweist, der in einem Bereich von einschließlich 7 bar bis einschließlich 8 bar liegt, so wird durch den Druck, durch welchen zuvor die Trenneinrichtung aktiviert wurde, die Kurzschlusseinrichtung aktiviert, insbesondere während die Trenneinrichtung noch aktiviert ist. Dabei verbleibt zunächst noch ein Aktivieren der Entgasungseinrichtung.

Eine weitere Ausführungsform zeichnet sich dadurch aus, dass die Entgasungseinrichtung dazu ausgebildet ist, von dem deaktivierten Zustand in den aktivierten Zustand bei einem in dem Aufnahmeraum herrschenden Druck überzugehen, welcher in einem Bereich von 9,5 bar bis 10,5 bar liegt. Mit anderen Worten, steigt der Innendruck weiter an, sodass der Innendruck einen Wert aufweist, welcher in einem Bereich von einschließlich 9,5 bar bis einschließlich 10,5 bar liegt, so wird durch den Druck schließlich auch die Entgasungseinrichtung aktiviert.

Bei einer besonders vorteilhaften Ausführungsform ist die Kurzschlusseinrichtung durch eine, insbesondere in dem Aufnahmeraum herrschende, Temperatur, insbesondere der Speicherzelle, aus dem deaktivierten Zustand in den aktivierten Zustand überführbar. Mit anderen Worten, zuvor wurden Ausführungsformen beschrieben, bei denen beispielsweise eine druckbedingte Auslösung beziehungsweise Aktivierung der Kurzschlusseinrichtung vorgesehen ist. Darunter ist insbesondere zu verstehen, dass, insbesondere einzig und allein, der, insbesondere in dem Aufnahmeraum herrschende, Druck die Aktivierung der Kurzschlusseinrichtung bewirkt. Nun ist es jedoch vorzugsweise vorgesehen, dass, insbesondere einzig und allein, durch eine Temperatur die Aktivierung der Kurzschlusseinrichtung bewirkt wird. Überschreitet somit beispielsweise eine Temperatur der Kurzschlusseinrichtung einen vorgebbaren Schwellenwert, so geht dadurch die Kurzschlusseinrichtung aus ihrem deaktivierten Zustand in ihren aktivierten Zustand über und trennt in der Folge zumindest die Speicherzelle von dem Stromkreis. Hierdurch kann eine besonders kurze Reaktionszeit im Falle eines propagierten thermischen Ereignisses realisiert werden.

Schließlich hat es sich als besonders vorteilhaft gezeigt, wenn die Speichereinrichtung wenigstens eine parallel zu der Speicherzelle geschaltete weitere Speicherzelle zum Speichern von elektrischer Energie aufweist, wobei die Kurzschlusseinrichtung dazu ausgebildet ist, zumindest die erste Speicherzelle und die parallel dazu geschaltete weitere Speicherzelle kurzzuschließen. Beispielsweise wird zuerst die Kurzschlusseinrichtung aktiviert, während die Trenneinrichtung und die Entgasungseinrichtung noch deaktiviert bleiben. Durch diese Aktivierung der Kurzschlusseinrichtung werden beispielsweise die erste Speicherzelle und die weitere Speicherzelle, insbesondere über die Trenneinrichtung, kurzgeschlossen. Insbesondere kann vorgesehen sein, dass die Speichereinrichtung die erste Speicherzelle und parallel dazu geschaltete, benachbarte weitere Speicherzellen aufweist, wobei die erste Speicherzelle und die benachbarten parallel geschaltete Speicherzellen durch Aktivieren der Kurzschlusseinrichtung, insbesondere über die Trenneinrichtung, kurzgeschlossen werden, insbesondere mittels eines externen Kurzschlusses.

Vorzugsweise wenige Millisekunden, insbesondere höchstens 100 Millisekunden, nach der Aktivierung der Kurzschlusseinrichtung beziehungsweise nach Bewirken des Kurzschlusses wird die Trenneinrichtung aktiviert, insbesondere während die Entgasungseinrichtung noch deaktiviert ist und/oder die Kurzschlusseinrichtung noch aktiviert ist. Durch Aktivieren der Trenneinrichtung wird zumindest die erste Speicherzelle, insbesondere die erste Speicherzelle und die weitere Speicherzelle, von dem Stromkreis getrennt. Die Kurzschlusseinrichtung hält den Kurzschluss mindestens so lange, insbesondere mindestens 60 Sekunden, bis die Entgasungseinrichtung, insbesondere aufgrund des weiter steigenden Innendrucks, aktiviert wird beziehungsweise bis die erste Speicherzelle öffnet.

Während der durch die Entgasungseinrichtung bewirkten Entgasung zumindest der ersten Speicherzelle, insbesondere während der ersten 10 bis 20 Sekunden der Entgasung, wird ein Großteil der Elektrolytlösung (Brennstoff) aus der ersten Speicherzelle entfernt.

Vorzugsweise umfasst die Trenneinrichtung wenigstens eine Schmelzsicherung, über welche durch Aktivierung der Kurzschlusseinrichtung die erste Speicherzelle und die parallel geschaltete weitere Speicherzelle beziehungsweise die parallel geschaltete weiteren Speicherzellen kurzgeschlossen werden. Ferner kann mittels der Schmelzsicherung die Trennung von dem Stromkreis bewirkt werden. Durch Verwendung einer solchen Schmelzsicherung können die Kosten besonders gering gehalten werden, da eine druckbasierte Einrichtung, insbesondere in Form der Trenneinrichtung, durch die Schmelzsicherung ersetzt werden kann, welche beispielsweise temperaturbasiert ist. Beispielsweise durch den Kurzschluss wird die Schmelzsicherung, über welche der Kurzschluss bewirkt wird, erhitzt. Dadurch schmilzt die Schmelzsicherung, wodurch zumindest die erste Speicherzelle von dem Stromkreis getrennt wird. Weiterhin kann eine besonders einfache räumliche Umsetzung dieser Lösung auf der Kathodenseite (+ Terminal) realisiert werden. Darüber hinaus kann durch diese Ausführungsform eine besonders hohe Betriebszuverlässigkeit der Speicherzelle dargestellt werden, da nur eine druckbasierte Einrichtung, insbesondere in Form der Entgasungseinrichtung und/oder der Kurzschlusseinrichtung, in der Speicherzelle ausreicht, um eine hohe Sicherheit gewährleisten zu können.

Ein zweiter Aspekt der Erfindung betrifft ein Kraftfahrzeug, mit wenigstens einer erfindungsgemäßen Speichereinrichtung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Verfahren zum Betreiben einer Speichereinrichtung zum Speichern von elektrischer Energie, insbesondere zum Betreiben einer erfindungsgemäßen Speichereinrichtung. Die Speichereinrichtung umfasst wenigstens eine Speicherzelle, welche ein Zellengehäuse, einen durch das Zellengehäuse begrenzten Aufnahmeraum und wenigstens ein in dem Aufnahmeraum aufgenommenes Speichermittel zum Speichern von elektrischer Energie aufweist. Außerdem umfasst die Speichereinrichtung, insbesondere die Speicherzelle, eine Sicherheitsvorrichtung, welche im Rahmen des Verfahrens aktiviert wird.

Um nun einen besonders sicheren Betrieb auf besonders kostengünstige Weise realisieren zu können, ist es erfindungsgemäß vorgesehen, dass die Sicherheitsvorrichtung eine zum Trennen der Speicherzelle von einem Stromkreis der Speichereinrichtung ausgebildete Trenneinrichtung als erste Sicherheitseinrichtung, eine zum Bewirken eines, insbesondere externen, Kurzschlusses der Speicherzelle ausgebildete Kurzschlusseinrichtung als zweite Sicherheitseinrichtung und eine zum Entgasen des Aufnahmeraums ausgebildete Entgasungseinrichtung als dritte Sicherheitseinrichtung umfasst, wobei im Rahmen des Verfahrens die Sicherheitseinrichtungen während eines kritischen Zustandsverlaufs der Speicherzelle nacheinander beziehungsweise aufeinanderfolgend und somit sequentiell beziehungsweise der Reihe nach aktiviert werden. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Während des kritischen Zustandsverlaufs zunächst die Trenneinrichtung, danach die Kurzschlusseinrichtung und danach die Entgasungseinrichtung aktiviert. Es wurde gefunden, dass diese Reihenfolge der Aktivierung der Sicherheitseinrichtungen besonders vorteilhaft ist, um eine übermäßige Propagation eines thermischen Ereignisses in der Speichereinrichtung vermeiden oder zumindest in Grenzen halten zu können.

Um dabei die Kosten besonders gering sowie einen besonders sicheren Betrieb realisieren zu können, ist es vorgesehen, dass die jeweilige Sicherheitseinrichtung durch einen jeweiligen, in dem Aufnahmeraum herrschenden Druck aktiviert wird, insbesondere dadurch, dass der Druck auf die jeweilige Sicherheitseinrichtung wirkt. Somit ist beispielsweise eine selbsttätige beziehungsweise selbstständige und dabei insbesondere einzig und allein durch den Druck bewirkte Aktivierung der jeweiligen Sicherheitseinrichtung vorgesehen, wobei die Sicherheitseinrichtungen insbesondere dadurch nacheinander aktiviert werden, dass der Druck während des kritischen Zustandsverlaufs zunimmt beziehungsweise ansteigt.

Somit hat es sich als besonders vorteilhaft gezeigt, wenn durch den während des kritischen Zustandsverlaufs zunehmenden, in dem Aufnahmeraum herrschenden Druck zunächst die Trenneinrichtung, danach die Kurzschlusseinrichtung und danach die Entgasungseinrichtung aktiviert werden.

Weitere Einzelheiten der Erfindung ergeben sich aus der nachfolgenden Beschreibung eines bevorzugten Ausführungsbeispiels mit den zugehörigen Zeichnungen. Dabei zeigt:
- Fig. 1: eine schematische Schnittansicht einer erfindungsgemäßen Speichereinrichtung gemäß einer ersten Ausführungsform, welche sich in einem Normalbetrieb befindet;
- Fig. 2: eine schematische Schnittansicht der Speichereinrichtung gemäß der ersten Ausführungsform, welche sich in einem ersten Zustand eines kritischen Zustandsverlaufs befindet;
- Fig. 3: eine schematische Schnittansicht der Speichereinrichtung gemäß der ersten Ausführungsform, welche sich in einem zweiten Zustand des kritischen Zustandsverlaufs befindet;
- Fig. 4: eine schematische Schnittansicht der Speichereinrichtung gemäß der ersten Ausführungsform, welche sich in einem dritten Zustand des kritischen Zustandsverlaufs befindet;
- Fig. 5: eine schematische Schnittansicht einer erfindungsgemäßen Speichereinrichtung gemäß einem Beispiel, um die Erfindung zu verstehen, welche sich in einem Normalbetrieb befindet;
- Fig. 6: eine schematische Schnittansicht der Speichereinrichtung gemäß einem Beispiel, um die Erfindung zu verstehen, welche sich in einem ersten Zustand eines kritischen Zustandsverlaufs befindet;
- Fig. 7: eine schematische Schnittansicht der Speichereinrichtung gemäß einem Beispiel, um die Erfindung zu verstehen, welche sich in einem zweiten Zustand des kritischen Zustandsverlaufs befindet;
- Fig. 8: eine schematische Schnittansicht der Speichereinrichtung gemäß einem Beispiel, um die Erfindung zu verstehen, welche sich in einem dritten Zustand des kritischen Zustandsverlaufs befindet; und
- Fig. 9: eine schematische Querschnittsansicht einer erfindungsgemäßen Speichereinrichtung gemäß einer spezielleren Ausführungsform.

In den Fig. sind gleiche oder funktionsgleiche Elemente mit gleichen Bezugszeichen versehen.

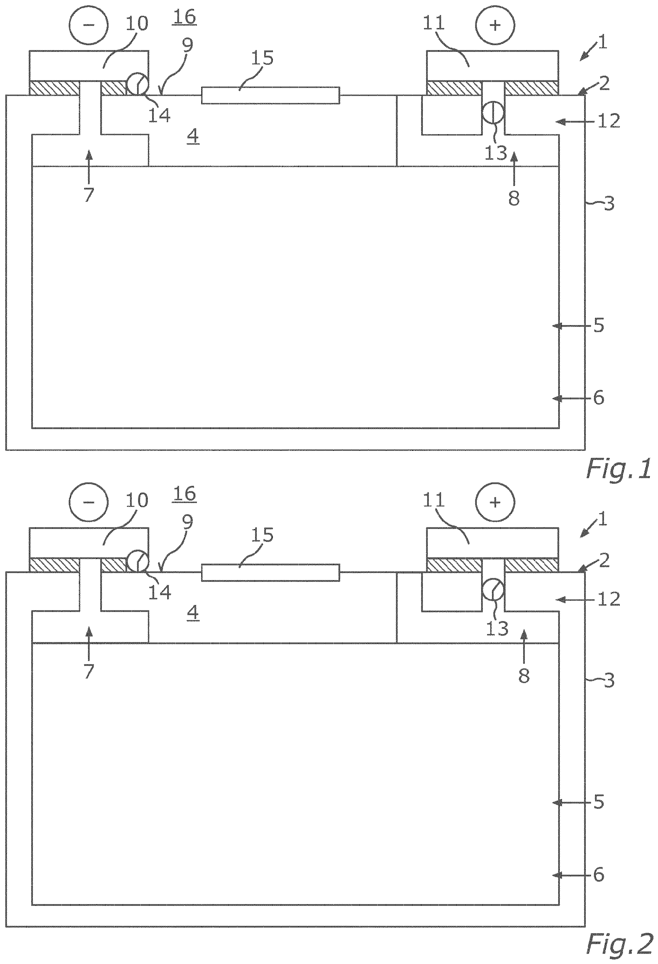

Fig. 1 zeigt in einer schematischen Schnittansicht eine im Ganzen mit 1 bezeichnete Speichereinrichtung gemäß einer ersten Ausführungsform zum Speichern von elektrischer Energie beziehungsweise elektrischem Strom. Die Speichereinrichtung 1 ist beispielsweise Bestandteil eines Kraftfahrzeugs, insbesondere eines Kraftwagens und vorzugsweise eines Personenkraftwagens, welcher beispielsweise auch wenigstens eine elektrische Maschine umfasst. Mittels der elektrischen Maschine ist beispielsweise wenigstens ein Rad des Kraftfahrzeugs beziehungsweise das Kraftfahrzeug insgesamt elektrisch antreibbar. Hierzu wird die elektrische Maschine in einem Motorbetrieb und somit als Elektromotor betrieben. Um die elektrische Maschine in ihrem Motorbetrieb zu betreiben, wird die elektrische Maschine mit der in der Speichereinrichtung 1 gespeicherten elektrischen Energie versorgt.

Die Speichereinrichtung 1 ist dabei beispielsweise als Batterie, insbesondere als Hochvolt-Batterie (HV-Batterie), ausgebildet. Mit anderen Worten ist die Speichereinrichtung 1 vorzugsweise als Hochvolt-Komponente ausgebildet, sodass die Speichereinrichtung 1 eine elektrische Spannung, insbesondere eine elektrische Betriebsspannung, aufweist beziehungsweise bereitstellt, welche beispielsweise mehr als 50 Volt, insbesondere mehr als 60 Volt und vorzugsweise mehrere 100 Volt, beträgt. Dadurch können besonders große elektrische Leistungen zum Antreiben des Kraftfahrzeugs realisiert werden.

Die Speichereinrichtung 1 umfasst wenigstens eine Speicherzelle 2, welche beispielsweise als Batteriezelle ausgebildet ist. Die Speichereinrichtung 1 umfasst ferner beispielsweise ein in den Fig. nicht dargestelltes Speichergehäuse, in welchem mehrere Speicherzellen, insbesondere Batteriezellen, angeordnet sind. Hierzu weist beispielsweise das Speichergehäuse einen Aufnahmebereich auf, in welchem die mehreren Speicherzellen angeordnet sind. Die vorigen und folgenden Ausführungen zur Speicherzelle 2 können ohne weiteres auch auf die anderen Speicherzellen übertragen werden und umgekehrt. Beispielsweise bilden die Speicherzellen ein Modul, insbesondere ein Batteriemodul.

Die Speicherzelle 2 umfasst ein Zellengehäuse 3 und einen durch das Zellengehäuse 3 begrenzten Aufnahmeraum 4, in welchem wenigstens ein Speichermittel 5 der Speicherzelle 2 angeordnet beziehungsweise aufgenommen ist. Mittels des Speichermittels 5 kann elektrische Energie beziehungsweise elektrischer Strom gespeichert werden. Hierzu umfasst das Speichermittel 5 beispielsweise wenigstens eine Elektrodeneinrichtung 6, welche wenigstens eine Elektrode und/oder wenigstens einen Elektrodenwickel aufweist. Der Elektrodenwickel ist beispielsweise eine Wicklung. Insbesondere umfasst die Wicklung beispielsweise eine erste Elektrode in Form einer Kathode und eine zweite Elektrode in Form einer Anode, wobei die Elektroden beispielsweise zu dem Elektrodenwickel aufgerollt beziehungsweise aufgewickelt sind. Insbesondere umfasst das Speichermittel 5 wenigstens einen zwischen den Elektroden angeordneten Separator. Der Elektrodenwickel kann dabei insbesondere eine Jelly-Roll-Struktur aufweisen, das heißt nach Art einer Biskuitrolle aufgewickelt beziehungsweise aufgerollt sein.

Außerdem weist die Speicherzelle 2 eine erste Elektrodenzunge 7 auf, welche auch als Fahne oder Fähnchen bezeichnet wird und beispielsweise mit der Anode elektrisch und vorzugsweise mechanisch verbunden ist. Die Elektrodenzunge 7 ist dabei beispielsweise aus einem metallischen Werkstoff, insbesondere aus Kupfer, gebildet. Ferner weist die Speicherzelle 2 eine zweite Elektrodenzunge 8 auf, welche auch als Fahne oder Fähnchen bezeichnet wird und beispielsweise mit der Kathode elektrisch und vorzugsweise mechanisch verbunden ist. Die Elektrodenzunge 8 ist dabei beispielsweise aus einem metallischen Werkstoff, insbesondere aus Aluminium, gebildet. Aus Fig. 1 ist erkennbar, dass die Elektrodenzungen 7 und 8 in dem Aufnahmeraum 4 angeordnet sind.

Die Speicherzelle 2 weist ferner einen zumindest teilweise auf einer dem Aufnahmeraum 4 abgewandten Außenseite 9 des Zellengehäuses 3 angeordneten ersten Anschluss 10 auf, welcher zumindest elektrisch mit der Elektrodenzunge 7 verbunden ist und dadurch einen elektrischen Minuspol der Speicherzelle 2 bildet. Des Weiteren weist die Speicherzelle 2 einen zumindest teilweise auf der dem Aufnahmeraum 4 abgewandten Außenseite 9 angeordneten zweiten Anschluss 11 auf, welcher zumindest elektrisch mit der Elektrodenzunge 8 verbunden ist und dadurch einen elektrischen Pluspol der Speicherzelle 2 bildet. Die Speicherzellen sind beispielsweise über ihre jeweiligen Anschlüsse 10 und 11 elektrisch miteinander verbunden und dadurch beispielsweise in Reihe oder parallel geschaltet, wodurch besonders hohe elektrische Leistungen zum Antreiben des Kraftfahrzeugs realisiert werden können.

Insbesondere kann das Speichermittel 5 einen in den Fig. nicht dargestellten Elektrolyten umfassen, in welchen beispielsweise die Elektrodeneinrichtung 6 zumindest teilweise, insbesondere zumindest überwiegend oder vollständig, eingetaucht ist. Kommt es nun beispielsweise zu einem thermischen Ereignis in der Speicherzelle 2, so wird die Speicherzelle 2, insbesondere das Speichermittel 5, im Rahmen des thermischen Ereignisses beispielsweise stark erwärmt. Ein solches thermisches Ereignis kann beispielsweise aus einem Unfall des Kraftfahrzeugs und somit beispielsweise aus einer unfallbedingten Kraftbeaufschlagung der Speichereinrichtung 1 resultieren. Durch das Aufheizen des Elektrolyten entsteht beispielsweise aus dem Elektrolyten ein Fluid, welches beispielsweise ein Gas und/oder eine Flüssigkeit, insbesondere eine Elektrolytlösung, umfassen kann. Infolge des thermischen Ereignisses wird somit das genannte Fluid in dem Aufnahmeraum 4 freigesetzt. Die Speicherzelle 2 umfasst dabei eine im Ganzen mit 12 bezeichnete Sicherheitsvorrichtung, welche beispielsweise im Rahmen eines Verfahrens zum Betreiben der Speichereinrichtung 1 aktiviert wird.

Um nun einen besonders sicheren Betrieb der Speichereinrichtung 1 realisieren zu können, umfasst die Sicherheitsvorrichtung 12 eine erste Sicherheitseinrichtung in Form einer Trenneinrichtung 13, mittels welcher die Speicherzelle 2 von einem Stromkreis der Speichereinrichtung 1 getrennt werden kann. In einem in Fig. 1 gezeigten Normalbetrieb sind beispielsweise die genannten Speicherzellen mit dem Stromkreis zumindest elektrisch verbunden, sodass die Speicherzellen über den Stromkreis elektrisch miteinander verbunden sind. Durch das durch die Trenneinrichtung 13 bewirkte Trennen der Speicherzelle 2 von dem Stromkreis wird die Speicherzelle 2 beispielsweise von den anderen Speicherzellen, insbesondere galvanisch, getrennt.

Die Sicherheitsvorrichtung 12 umfasst eine zweite Sicherheitseinrichtung in Form einer Kurzschlusseinrichtung 14, mittels welcher ein externer Kurzschluss der Speicherzelle 2 bewirkt werden kann. Unter diesem externen Kurzschluss ist zu verstehen, dass der Kurzschluss nicht etwa in der Speicherzelle 2 beziehungsweise in dem Aufnahmeraum 4, sondern außerhalb der Speicherzelle 2 beziehungsweise des Aufnahmeraums 4 und somit beispielsweise auf der dem Aufnahmeraum 4 abgewandten Außenseite 9 mittels der Kurzschlusseinrichtung 14 bewirkt werden kann beziehungsweise bewirkt wird.

Die Sicherheitsvorrichtung 12 umfasst ferner eine dritte Sicherheitseinrichtung in Form einer Entgasungseinrichtung 15, welche auch als Entgasungseinheit bezeichnet wird. Mittels der Entgasungseinrichtung 15 kann der Aufnahmeraum 4 entgast werden. Unter diesem Entgasen des Aufnahmeraums 4 ist zu verstehen, dass mittels der beziehungsweise über die Entgasungseinrichtung 15 das in dem Aufnahmeraum 4 freigesetzte Fluid zumindest teilweise aus dem Aufnahmeraum 4 und dabei insbesondere an die Umgebung 16 der Speicherzelle 2 beziehungsweise des Zellengehäuses 3 abgeführt wird.

Die Sicherheitseinrichtungen sind nun dazu ausgebildet, während eines anhand von Fig. 2 bis 4 veranschaulichten kritischen Zustandsverlaufs der Speicherzelle 2 nacheinander von einem jeweiligen deaktivierten Zustand in einen jeweiligen aktivierten Zustand überzugehen. Mit anderen Worten ist es im Rahmen des zuvor genannten Verfahrens vorgesehen, dass die Sicherheitseinrichtungen während des kritischen Zustandsverlaufs nacheinander, das heißt aufeinanderfolgend und somit sequentiell aktiviert werden, um dadurch beispielsweise einer thermischen Propagation in dem Speichergehäuse auf kostengünstige Weise entgegenzuwirken.

Fig. 1 zeigt den zuvor genannten Normalbetrieb der Speicherzelle 2, wobei der Normalbetrieb ein Normalzustand ist. In dem Normalbetrieb beziehungsweise in dem Normalzustand sind die Sicherheitseinrichtungen in ihrem deaktivierten Zustand, das heißt noch nicht aktiviert.

In dem Normalbetrieb beziehungsweise während des Normalbetriebs befindet sich ein in dem Aufnahmeraum 4 herrschender und auch als Innendruck bezeichneter Druck in einem Normalbereich. Kommt es nun beispielsweise zu einem thermischen Ereignis in der Speicherzelle 2, so wird beispielsweise das Fluid im Aufnahmeraum 4 freigesetzt, wodurch der Innendruck, welcher auch als Zelleninnendruck bezeichnet wird, ansteigt. Steigt der Innendruck beispielsweise derart an, dass der Innendruck seinen Normalbereich verlässt, so beginnt beispielsweise der zuvor genannte kritische Zustandsverlauf der Speicherzelle 2, und die Speicherzelle 2 kommt beispielsweise zunächst in einen in Fig. 2 veranschaulichten ersten kritischen Zustand des kritischen Zustandsverlaufs. Das thermische Ereignis führt beispielsweise zu einer Temperatur der Speicherzelle 2, wobei diese Temperatur oberhalb einer Sicherheitstemperatur liegt. Die Temperatur der Speicherzelle 2 führt beispielsweise dazu, dass der Innendruck einen Wert von circa 6 bar aufweist und dabei beispielsweise in einem Bereich von 5,5 bar bis 6,5 bar liegt. Durch diesen Innendruck wird zunächst die Trenneinrichtung 13 aktiviert, das heißt aus ihrem deaktivierten Zustand in ihren aktivierten Zustand überführt, während die Kurzschlusseinrichtung 14 und die Entgasungseinrichtung 15 noch in ihrem deaktivierten Zustand verbleiben, das heißt nicht aktiviert werden. Durch diese Aktivierung der Trenneinrichtung 13 wird die Speicherzelle 2 von dem auch als Speicherkreis bezeichneten Stromkreis getrennt.

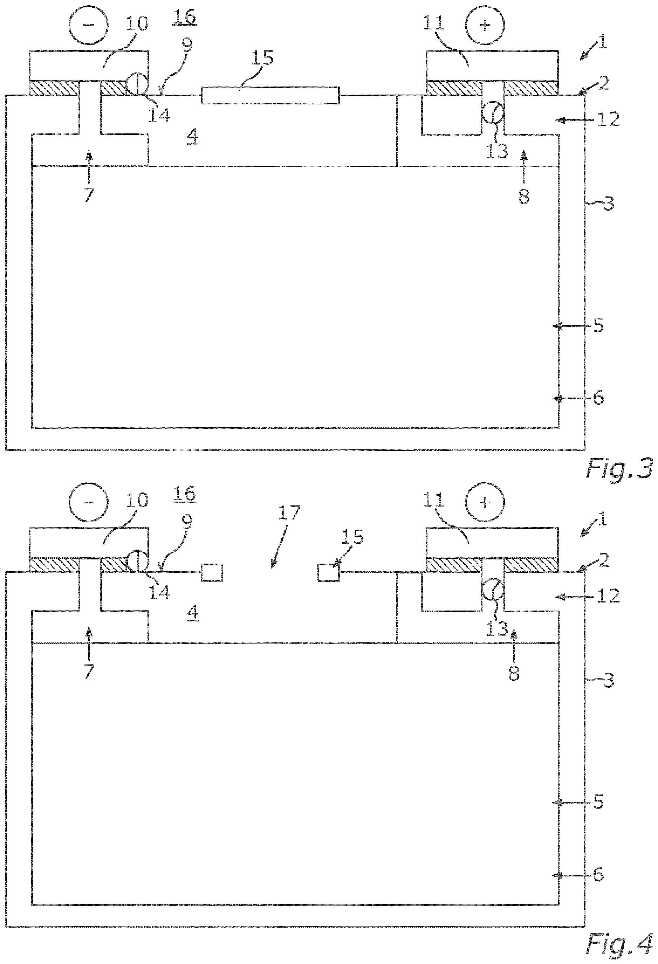

Steigt beispielsweise der Innendruck im Zuge des kritischen Zustandsverlaufs weiter an, sodass der Innendruck beispielsweise circa 7,5 bar beträgt beziehungsweise in einem Bereich von 7 bis 8 bar liegt, so kommt die Speicherzelle 2 beispielsweise in einen in Fig. 3 veranschaulichten zweiten kritischen Zustand des kritischen Zustandsverlaufs. Durch diesen Innendruck wird dann - während eine Aktivierung der Entgasungseinrichtung 15 unterbleibt - die Kurzschlusseinrichtung 14 aktiviert, das heißt aus ihrem deaktivierten Zustand in ihren aktivierten Zustand überführt, insbesondere während die zuvor aktivierte Trenneinrichtung 13 aktiviert bleibt. Durch das Aktivieren der Kurzschlusseinrichtung 14 wird, insbesondere während die Trenneinrichtung 13 aktiviert ist, extern kurzgeschlossen.

Steigt der Innendruck weiter, sodass der Innendruck beispielsweise circa 10 bar beträgt beziehungsweise in einem Bereich von 9,5 bis 10,5 bar liegt, so kommt die Speicherzelle 2 in einen in Fig. 4 veranschaulichten kritischen Zustand des kritischen Zustandsverlaufs. Durch diesen Innendruck wird - insbesondere, während die Trenneinrichtung 13 und die Kurzschlusseinrichtung 14 aktiviert sind beziehungsweise bleiben - die Entgasungseinrichtung 15 aktiviert. Durch dieses Aktivieren der Entgasungseinrichtung 15 gibt die Entgasungseinrichtung 15 beispielsweise eine insbesondere als Durchgangsöffnung ausgebildete Auslassöffnung 17 frei, welche insbesondere in dem Zellengehäuse 3 ausgebildet ist. Über die Auslassöffnung 17 kann zumindest ein Teil des zunächst in dem Aufnahmeraum 4 aufgenommenen Fluids aus dem Aufnahmeraum 4, insbesondere in die Umgebung 16, strömen. Mit anderen Worten wird durch den Innendruck, wenn dieser einen Bereich von 9,5 bis 10,5 bar erreicht, die auch als Entgasungseinheit bezeichnete Entgasungseinrichtung 15 geöffnet. Dadurch kann beispielsweise eine thermische Propagation in dem genannten Modul vermieden werden, sodass beispielsweise die anderen Speicherzellen nicht durch die Speicherzelle 2 in kritische Zustände gebracht werden. Somit kann eine Eskalation des Kritikalitätsniveaus des Sicherheitszustands der Speichereinrichtung 1 vermieden werden. Insbesondere kann ein vorzeitiges Austreten von Feuer und Flamme aus der Speichereinrichtung 1 vermieden werden, sodass eine besonders hohe Sicherheit darstellbar ist.

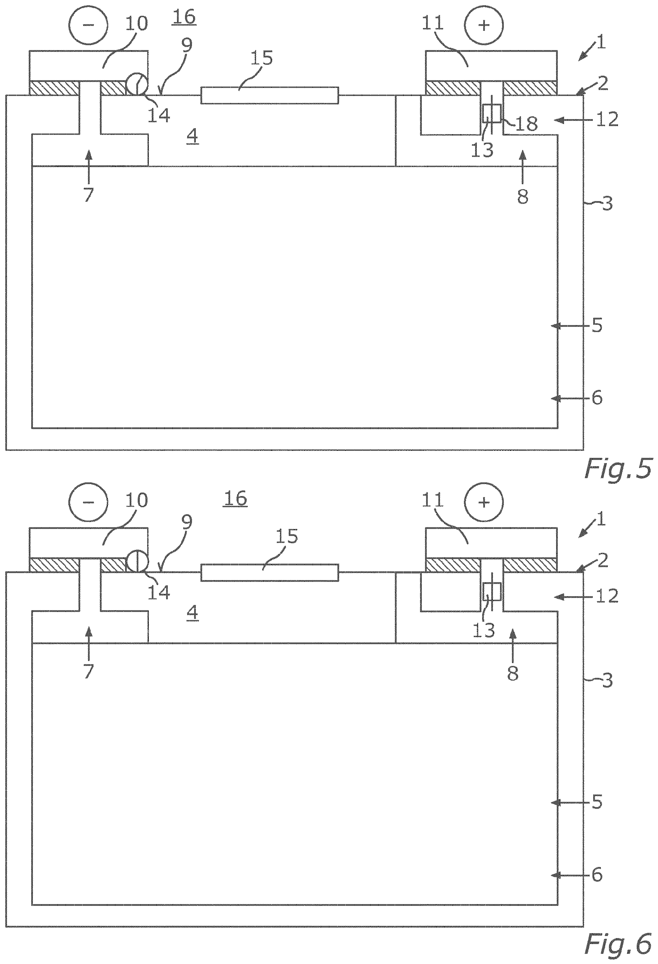

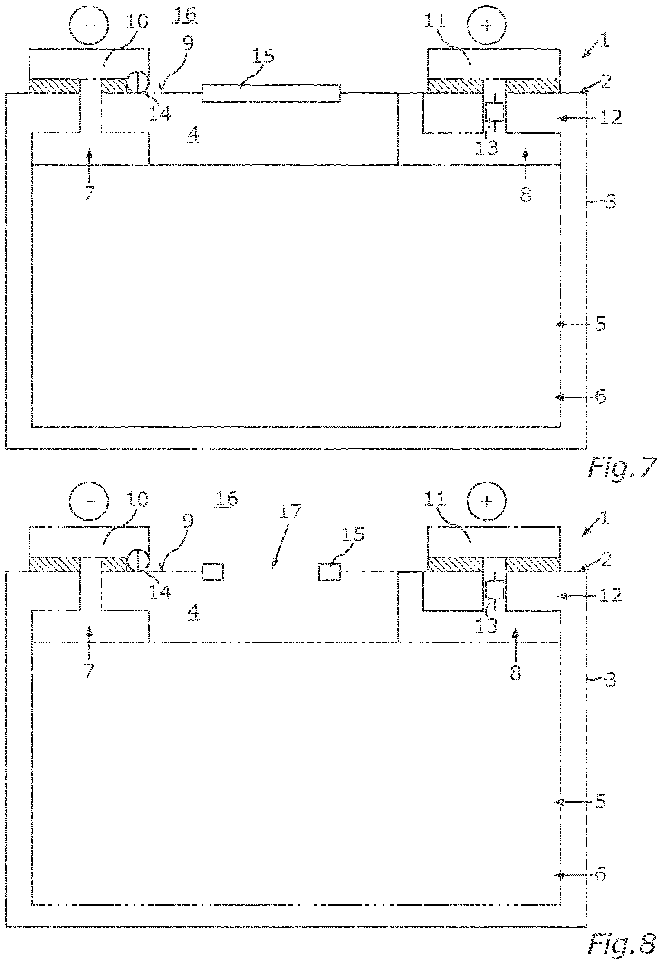

Fig. 5 bis 8 zeigen Beispiele der Speichereinrichtung 1, um die Erfindung zu verstehen. Dabei zeigt Fig. 5 beispielhaft die Speichereinrichtung 1 in einem Normalzustand, Fig. 6 einen ersten Zustand eines kritischen Zustandsverlaufs, Fig. 7 einen zweiten Zustand und Fig. 8 einen dritten Zustand des kritischen Zustandsverlaufs der Speichereinrichtung 1, insbesondere der Speicherzelle 2. Bei der zweiten weist die Speichereinrichtung 1 die Speicherzelle 2 und die anderen Speicherzellen auf, welche auch als weitere Speicherzellen bezeichnet werden und beispielsweise benachbart zu der Speicherzelle 2 sind. Die weiteren Speicherzellen sind beispielsweise zueinander und/oder zu der Speicherzelle 2 parallel geschaltet.

Bei den Beispielen umfasst die Trenneinrichtung 13 eine Schmelzsicherung 18 beziehungsweise ist als eine Schmelzsicherung 18 ausgebildet. Bei den Beispielen ist nun folgende Schaltreihenfolge vorgesehen: Übersteigt beispielsweise der Innendruck einen vorgebbaren Schwellenwert, so wird als erstes die Kurzschlusseinrichtung 14 aktiviert, wodurch die Speicherzelle 2 und die alle ihre benachbarten weiteren, parallel geschaltete, Speicherzellen über die Trenneinrichtung 13, insbesondere über die Schmelzsicherung 18, kurzgeschlossen werden. Die Kurzschlusseinrichtung 14 wird beispielsweise bei einem Druck aktiviert, welcher in einem Bereich von einschließlich 5,5 bar bis einschließlich 6,5 bar liegt. Wenige Millisekunden, insbesondere höchstens 100 Millisekunden oder weniger als 100 Millisekunden, nach der Aktivierung der Kurzschlusseinrichtung 14 beziehungsweise nach dem Kurzschließen der Speicherzelle 2 und der weitere parallel geschalteten Speicherzellen wird die Trenneinrichtung 13, insbesondere die Schmelzsicherung 18, aktiviert, wodurch zumindest die Speicherzelle 2 von dem Stromkreis getrennt wird.

Infolge des Kurzschließens der Speicherzelle 2 und der weiteren Speicherzellen über die Schmelzsicherung 18 wird diese erwärmt, sodass die Schmelzsicherung schmilzt. Dadurch trennt die Schmelzsicherung temperaturbedingt zumindest die Speicherzelle 2 von dem Stromkreis. Anschließend wird - wie beispielsweise zuvor beschrieben - die Entgasungseinrichtung 15 aktiviert, wodurch der Aufnahmeraum 4 entgast wird.

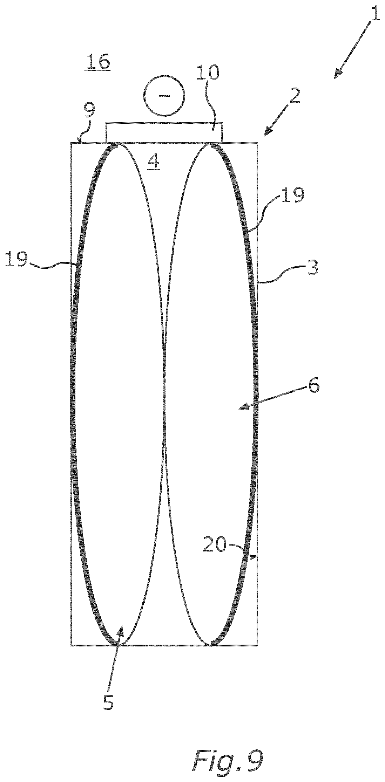

Fig. 9 zeigt eine spezielle Ausführungsform. Wie im Folgenden beschrieben wird, ist bei dieser Ausführungsform wie bei der ersten Ausführungsform und bei den Beispielen eine Lösung beziehungsweise eine Maßnahme innerhalb der Speicherzelle 2 vorgesehen, wobei mittels der Maßnahme die Reaktionszeit zur Erzeugung eines Kurzschlusses besonders gering gehalten werden kann. Diese Maßnahme umfasst eine polymerbeschichtete Kupferfolie 19, welche elektrisch mit dem Anschluss 10 und somit mit dem elektrischen Minuspol verbunden ist. Die Kupferfolie 19 ist zwischen der Elektrodeneinrichtung 6, insbesondere zwischen wenigstens einem Elektrodenwickel beziehungsweise einem Elektrodenstapel der Elektrodeneinrichtung 6, und einer dem Aufnahmeraum 4 zugewandten Innenseite 20 des Zellengehäuses angeordnet und berührt beispielsweise einerseits die Elektrodeneinrichtung 6 und andererseits die Innenseite 20 und somit das Zellengehäuse 3.

Wird die Kupferfolie 19 anormaler Wärme, das heißt anormal hoher Wärme, wie sie beispielsweise bei einem thermischen Ereignis auftritt, ausgesetzt, so schmilzt zumindest die Polymerbeschichtung der Kupferfolie 19, wodurch es zu einem Kurzschluss zwischen der Kupferfolie 19 und dem Zellengehäuse 3 kommt. Die Kupferfolie 19 fungiert somit als Kurzschlussauslöser, welcher an einer Wärmeübertragungsstelle zwischen zwei Zellen beziehungsweise zwischen der Elektrodeneinrichtung 6 und dem Zellengehäuse 20 angeordnet ist. Dadurch kann die Reaktionszeit zum Bewirken des Kurzschlusses besonders gering gehalten werden.

Des Weiteren kann ein in den Fig. nicht extra dargestelltes Beispiel vorgesehen sein, welche der ersten Ausführungsform entspricht, zumindest mit dem Unterschied, dass die Trenneinrichtung 13 und/oder die Kurzschlusseinrichtung 14 nicht druckbasiert, sondern temperaturbasiert von ihrem deaktivierten Zustand in ihren aktivierten Zustand übergeht. Hierzu umfasst die Trenneinrichtung 13 beziehungsweise die Kurzschlusseinrichtung 14 beispielsweise wenigstens ein Bimetall, insbesondere einen Bimetall-Kurzschlussauslöser, welcher sich beispielsweise bei einer Temperaturzunahme selbsttätig beziehungsweise selbstständig derart verformt, dass die Speicherzelle 2 von dem Stromkreis getrennt beziehungsweise der Kurzschluss verformt wird. Dabei weist beispielsweise die Trenneinrichtung 13 beziehungsweise die Kurzschlusseinrichtung 14 eine Aktivierungstemperatur auf, bei welcher die Trenneinrichtung 13 beziehungsweise die Kurzschlusseinrichtung 14 aktiviert wird. Diese Aktivierungstemperatur beträgt beispielsweise 100 Grad Celsius. Durch dieses temperaturbasierte Aktivieren der Trenneinrichtung 13 beziehungsweise der Kurzschlusseinrichtung 14 kann die Reaktionszeit im Falle eines thermischen Ereignisses besonders gering gehalten werden.

### Bezugszeichenliste

- 1: Speichereinrichtung
- 2: Speicherzelle
- 3: Zellengehäuse
- 4: Aufnahmeraum
- 5: Speichermittel
- 6: Elektrodeneinrichtung
- 7: Elektrodenzunge
- 8: Elektrodenzunge
- 9: Außenseite
- 10: Anschluss
- 11: Anschluss
- 12: Sicherheitsvorrichtung
- 13: Trenneinrichtung
- 14: Kurzschlusseinrichtung
- 15: Entgasungseinrichtung
- 16: Umgebung
- 17: Auslass
- 18: Schmelzsicherung
- 19: polymerbeschichtete Kupferfolie
- 20: Innenseite

## Patentansprüche

1. Speichereinrichtung (1) zum Speichern von elektrischer Energie für ein Kraftfahrzeug, mit wenigstens einer Speicherzelle (2), welche ein Zellengehäuse (3), einen durch das Zellengehäuse (3) begrenzten Aufnahmeraum (4) und wenigstens ein in dem Aufnahmeraum (4) aufgenommenes Speichermittel (5) zum Speichern von elektrischer Energie aufweist, und mit einer Sicherheitsvorrichtung (12), wobei die Sicherheitsvorrichtung (12) eine zum Trennen zumindest der Speicherzelle (2) von einem Stromkreis der Speichereinrichtung (1) ausgebildete Trenneinrichtung (13) als erste Sicherheitseinrichtung, eine zum Bewirken eines Kurzschlusses zumindest der Speicherzelle (2) ausgebildete Kurschlusseinrichtung (14) als zweite Sicherheitseinrichtung und eine zum Entgasen des Aufnahmeraums (4) ausgebildete Entgasungseinrichtung (15) als dritte Sicherheitseinrichtung umfasst, wobei die Sicherheitseinrichtungen dazu ausgebildet sind, während eines kritischen Zustandsverlaufs der Speicherzelle (2) nacheinander von einem jeweiligen deaktivierten Zustand in einen jeweiligen aktivierten Zustand überzugehen,
**dadurch gekennzeichnet, dass**
die Sicherheitsvorrichtung (12) dazu ausgebildet ist, dass während des kritischen Zustandsverlaufs zunächst die Trenneinrichtung (13), danach die Kurzschlusseinrichtung (14) und danach die Entgasungseinrichtung (15) von dem jeweiligen deaktivierten Zustand in den jeweiligen aktivierten Zustand übergeht, wobei die jeweilige Sicherheitseinrichtung durch einen jeweiligen, in dem Aufnahmeraum (4) herrschenden Druck aus dem jeweiligen deaktivierten Zustand in den jeweiligen aktivierten Zustand überführbar ist.

2. Speichereinrichtung (1) nach Anspruch 1,
**dadurch gekennzeichnet, dass**
mit während des kritischen Zustandsverlaufs zunehmendem, in dem Aufnahmeraum (4) herrschendem Druck zunächst die Trenneinrichtung (13), danach die Kurzschlusseinrichtung (14) und danach die Entgasungseinrichtung (15) von dem jeweiligen deaktivierten Zustand in den jeweiligen aktivierten Zustand übergeht.

3. Speichereinrichtung (1) nach einem der vorhergehenden Ansprüche,
**dadurch gekennzeichnet, dass**
die Trenneinrichtung (13) dazu ausgebildet ist, von dem deaktivierten Zustand in den aktivierten Zustand bei einem in dem Aufnahmeraum (4) herrschenden Druck überzugehen, welcher in einem Bereich von 5,5 bar bis 6,5 bar liegt.

4. Speichereinrichtung (1) nach einem der vorhergehenden Ansprüche,
**dadurch gekennzeichnet, dass**
die Kurzschlusseinrichtung (14) dazu ausgebildet ist, von dem deaktivierten Zustand in den aktivierten Zustand bei einem in dem Aufnahmeraum (4) herrschenden Druck überzugehen, welcher in einem Bereich von 7 bar bis 8 bar liegt.

5. Speichereinrichtung (1) nach einem der vorhergehenden Ansprüche,
**dadurch gekennzeichnet, dass**
die Entgasungseinrichtung (15) dazu ausgebildet ist, von dem deaktivierten Zustand in den aktivierten Zustand bei einem in dem Aufnahmeraum (4) herrschenden Druck überzugehen, welcher in einem Bereich von 9,5 bar bis 10,5 bar liegt.

6. Speichereinrichtung (1) nach einem der vorhergehenden Ansprüche,
**dadurch gekennzeichnet, dass**
die Speichereinrichtung (1) wenigstens eine parallel zu der Speicherzelle (2) geschaltete weitere Speicherzelle zum Speichern von elektrischer Energie aufweist, wobei die Kurzschlusseinrichtung (14) dazu ausgebildet ist, zumindest die erste Speicherzelle (2) und die parallel dazu geschaltete weitere Speicherzelle kurzzuschließen.

7. Kraftfahrzeug, mit wenigstens einer Speichereinrichtung (1) nach einem der vorhergehenden Ansprüche.

8. Verfahren zum Betreiben einer Speichereinrichtung (1) zum Speichern von elektrischer Energie für ein Kraftfahrzeug, mit wenigstens einer Speicherzelle (2), welche ein Zellengehäuse (3), einen durch das Zellengehäuse (3) begrenzten Aufnahmeraum (4) und wenigstens ein in dem Aufnahmeraum (4) aufgenommenes Speichermittel (5) zum Speichern von elektrischer Energie aufweist, und mit einer Sicherheitsvorrichtung (12), welche aktiviert wird, wobei die Sicherheitsvorrichtung (12) eine zum Trennen zumindest der Speicherzelle (2) von einem Stromkreis der Speichereinrichtung (1) ausgebildete Trenneinrichtung (13) als erste Sicherheitseinrichtung, eine zum Bewirken eines Kurzschlusses zumindest der Speicherzelle (2) ausgebildete Kurschlusseinrichtung (14) als zweite Sicherheitseinrichtung und eine zum Entgasen des Aufnahmeraums (4) ausgebildete Entgasungseinrichtung (15) als dritte Sicherheitseinrichtung umfasst, wobei die Sicherheitseinrichtungen während eines kritischen Zustandsverlaufs der Speicherzelle (2) nacheinander aktiviert werden,
**dadurch gekennzeichnet, dass**
während des kritischen Zustandsverlaufs zunächst die Trenneinrichtung (13), danach die Kurzschlusseinrichtung (14) und danach die Entgasungseinrichtung (15) aktiviert werden, wobei die jeweilige Sicherheitseinrichtung durch einen jeweiligen, in dem Aufnahmeraum (4) herrschenden Druck aktiviert wird.

9. Verfahren nach Anspruch 8,
**dadurch gekennzeichnet, dass**
durch den während des kritischen Zustandsverlaufs zunehmenden, in dem Aufnahmeraum (4) herrschenden Druck zunächst die Trenneinrichtung (13), danach die Kurzschlusseinrichtung (14) und danach die Entgasungseinrichtung (15) aktiviert wird.

## Claims

1. Storage device (1) for storing electrical energy for a motor vehicle, with at least one storage cell (2), which comprises a cell housing (3), a receiving chamber (4) delimited by the cell housing (3) and at least one storage means (5) accommodated in the receiving chamber (4) for storing electrical energy, and with a safety device (12), wherein the safety device (12) includes a separating device (13) designed for separating at least the storage cell (2) from a circuit of the storage device (1) as the first safety device, a short-circuit device (14) designed to cause a short circuit at least of the storage cell (2) as a second safety device and a degassing device (15) designed for degassing the receiving chamber (4) as a third safety device, wherein the safety devices are designed to change sequentially from a respective deactivated state to a respective activated state during a critical variation of the condition of the storage cell (2),
**characterized in that**
the safety device (12) is designed to ensure that the separating device (13), then the short-circuit device (14) and then the degassing device (15) change from the respective deactivated state to the respective activated state during the critical variation of the condition,
wherein the respective safety device can be changed from the respective deactivated state to the respective activated state by a respective pressure prevailing in the receiving chamber (4).

2. Storage device (1) according to Claim 1, **characterized in that**
with the pressure prevailing in the receiving chamber (4) increasing during the critical variation of the condition, first the separating device (13), then the short-circuit device (14) and then the degassing device (15) change from the respective deactivated state to the respective activated state.

3. Storage device (1) according to one of the preceding claims,
**characterized in that**
the separating device (13) is designed to change from the deactivated state to the activated state at a pressure prevailing in the receiving chamber (4) in a range of 5.5 bar to 6.5 bar.

4. Storage device (1) according to one of the preceding claims,
**characterized in that**
the short-circuit device (14) is designed to change from the deactivated state to the activated state at a pressure prevailing in the receiving chamber (4) in a range from 7 bar to 8 bar.

5. Storage device (1) according to one of the preceding claims,
**characterized in that**
the degassing device (15) is designed to change from the deactivated state to the activated state at a pressure prevailing in the receiving chamber (4) in a range from 9.5 bar to 10.5 bar.

6. Storage device (1) according to one of the preceding claims,
**characterized in that**
the storage device (1) comprises at least one further storage cell connected in parallel to the storage cell (2) for storing electrical energy, wherein the short-circuit device (14) is designed to short-circuit at least the first storage cell (2) and the parallel connected further storage cell.

7. Motor vehicle, with at least one storage device (1) according to one of the preceding claims.

8. Method for operating a storage device (1) for storing electrical energy for a motor vehicle, with at least one storage cell (2), which comprises a cell housing (3), a receiving chamber (4) delimited by the cell housing (3) and at least one storage means (5) accommodated in the receiving chamber (4) for storing electrical energy, and with a safety apparatus (12), which is activated, wherein the safety apparatus (12) includes a separating device (13) designed for separating at least the storage cell (2) from a circuit of the storage device (1) as the first safety device, a short-circuit device (14) designed to cause a short circuit at least of the storage cell (2) as a second safety device and a degassing device (15) designed for degassing the receiving chamber (4) as a third safety device, wherein the safety devices are activated sequentially during a critical variation of the condition of the storage cell (2),
**characterized in that**
during the critical variation of the condition, first the separating device (13), then the short-circuit device (14) and then the degassing device (15) are activated, wherein the respective safety device is activated by a respective pressure prevailing in the receiving chamber (4) .

9. Method according to Claim 8,
**characterized in that**
first the separating device (13), then the short-circuit device (14) and then the degassing device (15) is activated by the increasing pressure prevailing in the receiving chamber (4) during the critical variation of the condition.

## Revendications

1. Organe de stockage (1) destiné à stocker de l'énergie électrique destinée à un véhicule automobile, ledit organe de stockage comprenant au moins une cellule de stockage (2), laquelle comporte un boîtier de cellule (3), un espace de réception (4) délimité par le boîtier de cellule (3) et au moins un moyen de stockage (5) reçu dans l'espace de réception (4) et destiné à stocker de l'énergie électrique, et un dispositif de sécurité (12), le dispositif de sécurité (12) comportant comme premier organe de sécurité un organe de séparation (13) conçu pour séparer au moins la cellule de stockage (2) d'un circuit de l'organe de stockage (1), comme deuxième organe de sécurité un organe de court-circuit (14) conçu pour court-circuiter au moins la cellule de stockage (2) et comme troisième organe de sécurité un organe de dégazage (15) conçu pour dégazer l'espace de réception (4), les organes de sécurité étant conçus pour passer l'un après l'autre d'un état désactivé respectif à un état activé respectif pendant une évolution d'état critique de la cellule de stockage (2),
**caractérisé en ce que**
le dispositif de sécurité (12) est conçu de telle sorte que, pendant l'évolution d'état critique, d'abord l'organe de séparation (13), puis l'organe de court-circuit (14) et ensuite l'organe de dégazage (15) passe de l'état désactivé respectif à l'état activé respectif, l'organe de sécurité respectif pouvant être transféré de l'état désactivé respectif à l'état activé respectif par une pression respective régnant dans l'espace de réception (4).

2. Organe de stockage (1) selon la revendication 1,
**caractérisé en ce que**
d'abord l'organe de séparation (13), puis l'organe de court-circuit (14) et ensuite l'organe de dégazage (15) passe de l'état désactivé respectif à l'état activé respectif à mesure que la pression régnant dans l'espace de réception (4) augmente pendant l'évolution de l'état critique.

3. Organe de stockage (1) selon l'une des revendications précédentes,
**caractérisé en ce que**
l'organe de séparation (13) est conçu pour passer de l'état désactivé à l'état activé à une pression régnant dans l'espace de réception (4) qui est comprise entre 5,5 bars et 6,5 bars.

4. Organe de stockage (1) selon l'une des revendications précédentes,
**caractérisé en ce que**
l'organe de court-circuit (14) est conçu pour passer de l'état désactivé à l'état activé à une pression régnant dans l'espace de réception (4) qui est comprise entre 7 bars et 8 bars.

5. Organe de stockage (1) selon l'une des revendications précédentes,
**caractérisé en ce que**
l'organe de dégazage (15) est conçu pour passer de l'état désactivé à l'état activé à une pression régnant dans l'espace de réception (4) qui est comprise entre 9,5 bars et 10,5 bars.

6. Organe de stockage (1) selon l'une des revendications précédentes,
**caractérisé en ce que**
l'organe de stockage (1) comporte au moins une autre cellule de stockage montée en parallèle avec la cellule de stockage (2) et destinée à stocker de l'énergie électrique,
l'organe de court-circuit (14) étant conçu pour court-circuiter au moins la première cellule de stockage (2) et l'autre cellule de stockage montée en parallèle avec celle-ci.

7. Véhicule automobile, comprenant au moins un organe de stockage (1) selon l'une des revendications précédentes.

8. Procédé de fonctionnement d'un organe de stockage (1) destiné à stocker de l'énergie électrique destinée à un véhicule automobile,
ledit organe de stockage comprenant au moins une cellule de stockage (2), laquelle comporte un boîtier de cellule (3), un espace de réception (4) délimité par le boîtier de cellule (3) et au moins un moyen de stockage (5) reçu dans l'espace de réception (4) et destiné à stocker de l'énergie électrique, et un dispositif de sécurité (12) qui est activé, le dispositif de sécurité (12) comportant comme premier organe de sécurité un organe de séparation (13) conçu pour séparer au moins la cellule de stockage (2) d'un circuit de l'organe de stockage (1), comme deuxième organe de sécurité un organe de court-circuit (14) conçu pour court-circuiter au moins la cellule de stockage (2) et comme troisième organe de sécurité un organe de dégazage (15) conçu pour dégazer l'espace de réception (4), les organes de sécurité étant conçus pour passer l'un après l'autre d'un état désactivé respectif à un état activé respectif pendant une évolution d'état critique de la cellule de stockage (2),
**caractérisé en ce que**
pendant l'évolution d'état critique, d'abord l'organe de séparation (13), puis l'organe de court-circuit (14) et ensuite l'organe de dégazage (15) sont activés, l'organe de sécurité respectif étant activé par une pression respective régnant dans l'espace de réception (4) .

9. Procédé selon la revendication 8,
**caractérisé en ce que**
d'abord l'organe de séparation (13), puis l'organe de court-circuit (14) et ensuite l'organe de dégazage (15) sont activés par la pression régnant dans l'espace de réception (4) qui augmente pendant l'évolution de l'état critique.
